# EUROPÄISCHE PATENTANMELDUNG

(11) **EP 1 744 074 A2**
(43) Veröffentlichungstag der Anmeldung: **17.01.2007**
(21) Anmeldenummer: 06012802.2
(22) Anmeldetag: 22.06.2006
(51) Int. Cl.: F16D 43/18, F16F 15/139

(54) **Drehmomentübertragungseinrichtung**

(30) Priorität: 11.07.2005 DE 102005032589
(71) Anmelder: LuK Lamellen und Kupplungsbau Beteiligungs KG, 77813 Bühl (DE)
(72) Erfinder: Grahl, Uwe, 77815 Bühl (DE); Ferderer, Frank, 77815 Bühl (DE); Ehrmann, Klemens, 77855 Achern (DE); Züfle, Markus, 77815 Bühl (DE)

(57) **Zusammenfassung**

Die Erfindung betrifft eine Drehmomentübertragungseinrichtung im Antriebsstrang (101) eines Kraftfahrzeugs zur Drehmomentübertragung zwischen einer Antriebseinheit (103), insbesondere einer Brennkraftmaschine, mit einer Abtriebswelle (104), insbesondere einer Kurbelwelle, und einem Getriebe (105) mit mindestens einer Getriebeeingangswelle (130), mit einer Fliehkraftpendeleinrichtung (1), die mehrere Pendelmassen (11-14,21,23) umfasst, die mit Hilfe von Laufrollen (25,26) an einer Pendelmassenträgereinrichtung (2) relativ zu dieser bewegbar angebracht sind, und mit mindestens einer Kupplungseinrichtung (106) und/oder mit mindestens einer Drehschwingungsdämpfungseinrichtung (107).

Um die Drehmomentübertragungseiririchtung, insbesondere im Hinblick auf die im Betrieb auftretende Geräuschentwicklung, zu optimieren, weisen die Laufrollen (25,26) jeweils mindestens einen Bund (78,79) auf, der unter Fliehkrafteinwirkung auf die Pendelmasse (11-14,21,23) in axialer Richtung zwischen der Pendelmasse und der Pendelmassenträgereinrichtung angeordnet ist.

## Beschreibung

Die Erfindung betrifft eine Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, mit einer Fliehkraftpendeleinrichtung, die mehrere Pendelmassen umfasst, die mit Hilfe von Laufrollen an einer Pendelmassenträgereinrichtung relativ zu dieser bewegbar angebracht sind, und mit mindestens einer Kupplungseinrichtung und/oder mit mindestens einer Drehschwingungsdämpfungseinrichtung.

Aufgabe der Erfindung ist es, eine Drehmomentübertragungseinrichtung gemäß dem Oberbegriff des Anspruchs 1, insbesondere im Hinblick auf die im Betrieb auftretende Geräuschentwicklung, zu optimieren.

Die Aufgabe ist bei einer Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, mit einer Fliehkraftpendeleinrichtung, die mehrere Pendelmassen umfasst, die mit Hilfe von Laufrollen an einer Pendelmassenträgereinrichtung relativ zu dieser bewegbar angebracht sind, und mit mindestens einer Kupplungseinrichtung und/oder mit mindestens einer Drehschwingungsdämpfungseinrichtung, dadurch gelöst, dass die Laufrollen jeweils mindestens einen Bund aufweisen, der unter Fliehkrafteinwirkung auf die Pendelmasse in axialer Richtung zwischen der Pendelmasse und der Pendelmassenträgereinrichtung angeordnet ist. Der Bund hat unter anderem die Funktion, im normalen Betrieb der Drehmomentübertragungseinrichtung zu verhindern, dass die Pendelmassen in Kontakt mit der Pendelmassenträgereinrichtung kommen.

Ein bevorzugtes Ausführungsbeispiel der Drehmomentübertragungseinrichtung ist dadurch gekennzeichnet, dass sich der Bund in radialer Richtung nach außen hin verjüngt. Dadurch werden Beschädigungen des Bundes und/oder der Pendelmassenträgereinrichtung verhindert, wenn der Bund mit der Pendelmassenträgereinrichtung in Kontakt kommt.

Ein weiteres bevorzugtes Ausführungsbeispiel der Drehmomentübertragungseinrichtung ist dadurch gekennzeichnet, dass die Laufrollen jeweils in einer Aussparung angeordnet sind, die in der Pendelmassenträgereinrichtung ausgespart und deren Abmessungen in radialer Richtung des Bundes größer als der Außendurchmesser des Bundes sind. Dadurch wird die Montage der Laufrollen vereinfacht. Bei der Aussparung handelt es sich vorzugsweise um ein Durchgangsloch, dessen Kontur eine Laufbahn für die zugehörige Laufrolle bildet.

Ein weiteres bevorzugtes Ausführungsbeispiel der Drehmomentübertragungseinrichtung ist dadurch gekennzeichnet, dass die Enden der Laufrollen jeweils in einer Ausnehmung der Pendelmassen angeordnet sind, deren Abmessungen in radialer Richtung des Bundes kleiner als der Außendurchmesser des Bundes sind. Dadurch wird sichergestellt, dass die Laufrollen nach ihrer Montage nicht mehr herausfallen können. Bei der Ausnehmung handelt es sich vorzugsweise um ein Durchgangsloch mit einer Kontur, die eine Laufbahn für die zugehörige Laufrolle bildet.

Die oben angegebene Aufgabe ist bei einer Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, mit einer Fliehkraftpendeleinrichtung, die mehrere Pendelmassen umfasst, die mit Hilfe von Laufrollen an einer Pendelmassenträgereinrichtung relativ zu dieser bewegbar angebracht sind, und mit mindestens einer Kupplungseinrichtung und/oder mit mindestens einer Drehschwingungsdämpfungseinrichtung auch dadurch gelöst, dass die Bewegung der Pendelmassen relativ zu der Pendelmassenträgereinrichtung durch mindestens ein Anschlagelement begrenzt ist, das in Umfangsrichtung, zumindest teilweise, elastisch oder dämpfend ausgebildet ist. Dadurch werden unerwünschte Geräusche im Betrieb der Drehmomentübertragungseinrichtung gedämpft.

Ein bevorzugtes Ausführungsbeispiel der Drehmomentübertragungseinrichtung ist dadurch gekennzeichnet, dass das Anschlagelement von einem Stufenbolzen gebildet wird, dessen Enden jeweils in einer Pendelmasse aufgenommen sind und der zwischen seinen Enden einen Mittenabschnitt aufweist, der mit einem elastischen oder dämpfenden Material ummantelt ist. Der Mittenabschnitt des Stufenbolzens ist vorzugsweise mit Spiel in der Pendelmassenträgereinrichtung aufgenommen und kommt nur in den Extremstellungen der Pendelmassen an der Pendelmassenträgereinrichtung in Anschlag, um die Bewegung der Pendelmassen zu begrenzen.

Die oben angegebene Aufgabe ist bei einer Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, mit einer Fliehkraftpendeleinrichtung, die mehrere Pendelmassen umfasst, die mit Hilfe von Laufrollen an einer Pendelmassenträgereinrichtung relativ zu dieser bewegbar angebracht sind, und mit mindestens einer Kupplungseinrichtung und/oder mit mindestens einer Drehschwingungsdämpfungseinrichtung, auch dadurch gelöst, dass an den Pendelmassen und/oder an der Pendelmassenträgereinrichtung mindestens ein axiales Anlaufelement angebracht ist. Das axiale Anlaufelement dient dazu, auch bei geringen Drehzahlen einen Kontakt zwischen den Pendelmassen und der Pendelmassenträgereinrichtung zu verhindern.

Ein bevorzugtes Ausführungsbeispiel der Drehmomentübertragungseinrichtung ist dadurch gekennzeichnet, dass das axiale Anlaufelement von einem Kunststoffstopfen mit einem Kopf gebildet wird, der so an der Pendelmasse angebracht ist, dass der Kopf in axialer Richtung zumindest teilweise zwischen der Pendelmasse und der Pendelmassenträgereinrichtung angeordnet ist. Vorzugsweise ist im normalen Betrieb der Drehmomentübertragungseinrichtung in axialer Richtung etwas Spiel zwischen dem axialen Anlaufelement und der Pendelmassenträgereinrichtung vorgesehen.

Weitere bevorzugte Ausführungsbeispiele der Drehmomentübertragungseinrichtung sind dadurch gekennzeichnet, dass die Fliehkraftpendeleinrichtung zwischen der Kupplungseinrichtung und der Drehschwingungsdämpfungseinrichtung oder an einem Kupplungsdeckel der Kupplungseinrichtung angebracht ist.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine Fliehkraftpendeleinrichtung gemäß einem Ausführungsbeispiel der Erfindung in der Draufsicht;
- Figur 2: die Ansicht eines Schnitts entlang der Linie II-II in Figur 1;
- Figur 3: eine Pendelmassenträgereinrichtung der Fliehkraftpendeleinrichtung aus Figur 1 in der Draufsicht;
- Figur 4: einen Ausschnitt der Fliehkraftpendeleinrichtung aus Figur 1 in einem Schnitt entlang der Linie IV-IV in Figur 5;
- Figur 5: die Ansicht eines Schnitts entlang der Linie V-V in Figur 4;
- Figur 6: eine Pendelmasse der in Figur 1 dargestellten Fliehkraftpendeleinrichtung in der Draufsicht;
- Figur 7: eine Laufrolle der in Figur 1 dargestellten Fliehkraftpendeleinrichtung;
- Figur 8: einen Stufenbolzen der in Figur 1 dargestellten Fliehkraftpendeleinrichtung;
- Figur 9: ein Anschlagelement der in Figur 1 dargestellten Fliehkraftpendeleinrichtung;
- Figur 10: die Pendelmasse aus Figur 6 mit montierten axialen Anlaufelementen;
- Figur 11: die Ansicht eines Schnitts entlang der Linie XI-XI in Figur 4;
- Figur 12: eine Drehmomentübertragungseinrichtung mit einer Drehschwingungsdämpfungseinrichtung und einer Kupplung; wobei zwischen der Kupplung und der Drehschwingungsdämpfungseinrichtung eine Fliehkraftpendeleinrichtung angeordnet ist;
- Figur 13: eine ähnliche Drehmomentübertragungseinrichtung wie in Figur 12 ohne Kupplung;
- Figur 14: eine ähnliche Drehmomentübertragungseinrichtung wie in Figur 12, wobei eine Fliehkraftpendeleinrichtung radial außen an einem Kupplungsdeckel angebracht ist;
- Figur 15: eine ähnliche Drehmomentübertragungseinrichtung wie in Figur 12, wobei eine Fliehkraftpendeleinrichtung radial innerhalb einer Drehschwingungsdämpfungseinrichtung angeordnet ist;
- Figur 16: eine Fliehkraftpendeleinrichtung gemäß einem weiteren Ausführungsbeispiel;
- Figur 17: eine Drehmomentübertragungseinrichtung mit einem Kupplungsdeckel, an dem die Fliehkraftpendeleinrichtung aus Figur 16 angebracht ist;
- Figur 18: einen Halbschnitt der Drehmomentübertragungseinrichtung aus Figur 17 unter einem anderen Winkel;
- Figur 19: einen weiteren Halbschnitt der Drehmomentübertragungseinrichtung aus Figur 17 unter einem anderen Winkel;
- Figur 20: eine Pendelmassenträgereinrichtung der Fliehkraftpendeleinrichtung aus Figur 16;
- Figur 21: eine Pendelmasse der Fliehkraftpendeleinrichtung aus Figur 16;
- Figur 22: ein Anschlagelement der Fliehkraftpendeleinrichtung aus Figur 16 und
- Figur 23: eine Laufrolle der Fliehkraftpendeleinrichtung aus Figur 16.

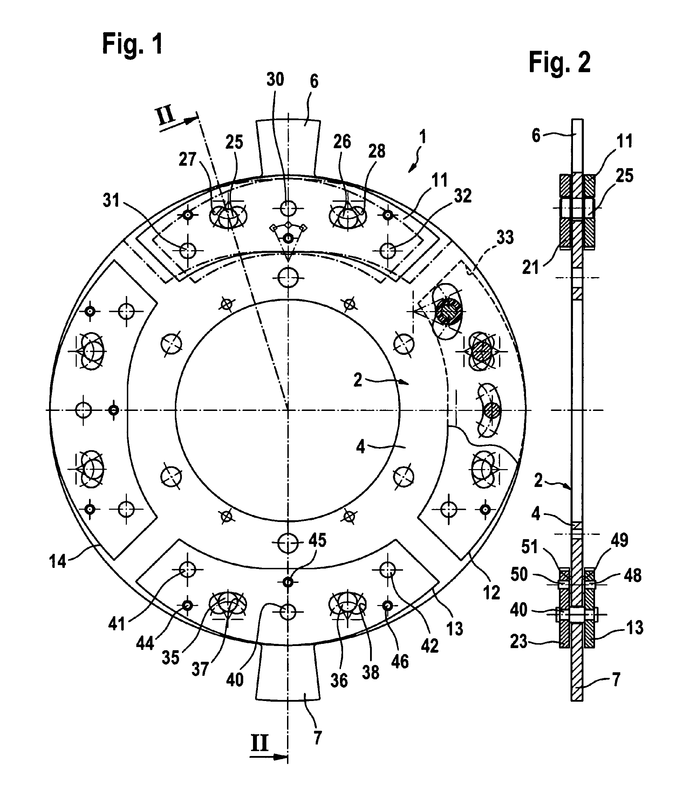

In Figur 1 ist eine Fliehkraftpendeleinrichtung 1 gemäß einem Ausführungsbeispiel der Erfindung in der Draufsicht dargestellt. Die Fliehkraftpendeleinrichtung 1 umfasst eine Pendelmassenträgereinrichtung 2, die im Wesentlichen die Gestalt einer Kreisringscheibe 4 aufweist. Von der Kreisringscheibe 4 erstrecken sich zwei diametral angeordnete Ansätze 6, 7 radial nach außen. Die Ansätze 6, 7 weisen Anlageflächen für (nicht dargestellte) Bogenfedern einer Drehschwingungsdämpfungseinrichtung auf. In dem dargestellten Ausführungsbeispiel hat die Pendelmassenträgereinrichtung 2 gleichzeitig die Funktion eines Ausgangsflansches einer Drehschwingungsdämpfungseinrichtung und wird daher auch als Flansch bezeichnet.

Auf der in Figur 1 sichtbaren Oberfläche der Kreisringscheibe 4 sind vier Pendelmassen 11, 14 begrenzt bewegbar an der Pendelmassenträgereinrichtung 2 angebracht. In Figur 2 ist die Ansicht eines Schnitts entlang der Linie II-II in Figur 1 dargestellt. In der Schnittansicht sieht man, dass jeweils zwei Pendelmassen 11, 21, 13, 23 paarweise gegenüberliegend an der Pendelmassenträgereinrichtung 2 angebracht sind.

Die Bewegung der Pendelmassen 11, 21 eines Pendelmassenpaares wird, wie in Figur 1 gezeigt ist, durch Laufrollen 25, 26 ermöglicht, die in Laufbahnen 27, 28 geführt sind, die wiederum in der zugehörigen Pendelmasse 11 ausgespart sind. Die Laufbahnen 27, 28 werden von Durchgangslöchern gebildet, die sich in axialer Richtung durch die Pendelmasse 11 hindurch erstrecken und die Gestalt von Langlöchern aufweisen, die nierenförmig gekrümmt sind. Zur Anbringung der Pendelmassen 11, 21 an der Pendelmassenträgereinrichtung 2 sind des Weiteren drei Stufenbolzen 30 bis 32 vorgesehen. Innerhalb eines gestrichelten Aufbruchs 33 sieht man, dass in der Kreisringscheibe 4 ebenfalls nierenförmig gekrümmte Langlöcher zur Aufnahme der Stufenbolzen ausgebildet sind.

Die Pendelmasse 13 ist mit Hilfe von Laufrollen 35, 36 an der Pendelmassenträgereinrichtung 2 angebracht. Die Bewegung der Laufrollen 35, 36 wird durch Laufbahnen 37, 38 begrenzt. Des Weiteren sind wie bei den anderen Pendelmassen drei Stufenbolzen 40 bis 42 vorgesehen. Die Laufrollen 35, 36 und die Stufenbolzen 40 bis 42 dienen dazu, die Bewegung der Pendelmassen 13, 23 in der Zeichenebene, also in radialer Richtung und in Umfangsrichtung zu begrenzen und zu definieren. Darüber hinaus sind an den Pendelmassen 13, 23 noch jeweils drei axiale Anlaufelemente 44 bis 46 angebracht. In Figur 2 sieht man, dass die axialen Anlaufelemente, die an den Pendelmassen 13, 23 angebracht sind, jeweils einen Bolzen 48, 50 mit einem Bolzenkopf 49, 51 aufweisen, der in axialer Richtung zwischen den Pendelmassen 13, 23 und der Kreisringscheibe 4 der Pendelmassenträgereinrichtung 2 angeordnet ist. Die axialen Anlaufelemente 44 bis 46 sind vorzugsweise aus Kunststoff gebildet, und dienen dazu, Geräusche zu reduzieren, die entstehen, wenn die Pendelmassen 13, 23 in axialer Richtung an der Kreisringscheibe 4 der Pendelmassenträgereinrichtung 2 anschlagen.

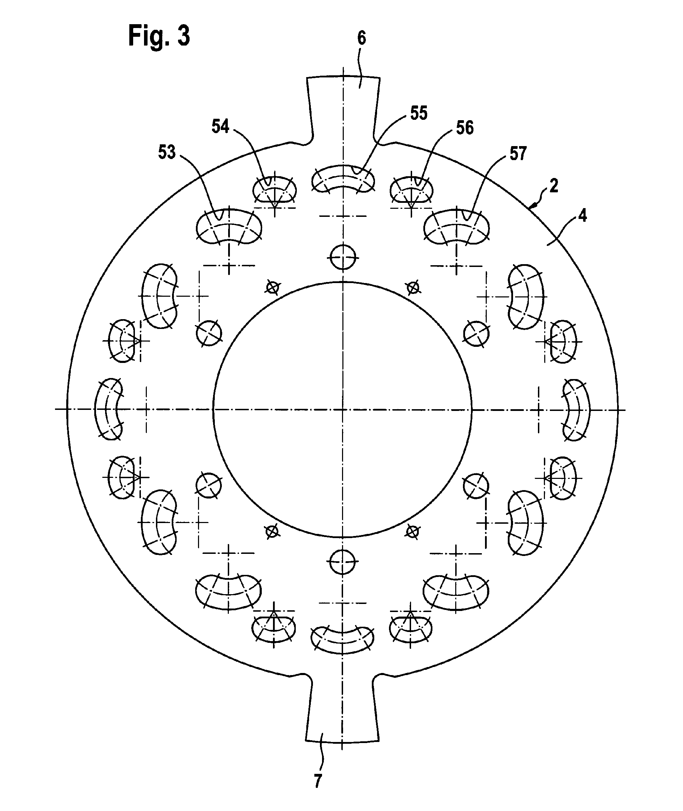

In Figur 3 ist die Pendelmassenträgereinrichtung 2 allein in der Draufsicht dargestellt. In der Draufsicht sieht man, dass in der Kreisringscheibe 4 der Pendelmassenträgereinrichtung 2 zur Befestigung einer Pendelmasse jeweils fünf Durchgangslöcher 53 bis 57 ausgespart sind. Die Durchgangslöcher 53 bis 57 haben jeweils die Gestalt eines Langlochs, das im Wesentlichen nierenförmig gekrümmt ausgebildet ist. Die Krümmung der Langlöcher 53 bis 57 in der Pendelmassenträgereinrichtung 2 ist jeweils entgegengesetzt zu der Krümmung der Langlöcher 27, 28 in den Pendelmassen 11. Die Langlöcher 53 bis 57 sind parallel zueinander angeordnet. Radial innerhalb der Durchgangslöcher 53 bis 57 sind weitere Durchgangslöcher in der Kreisringscheibe 4 ausgespart, die unter anderem dazu dienen, die Pendelmassenträgereinrichtung 2 an weiteren Teilen der erfindungsgemäßen Drehmomentübertragungseinrichtung anzubringen.

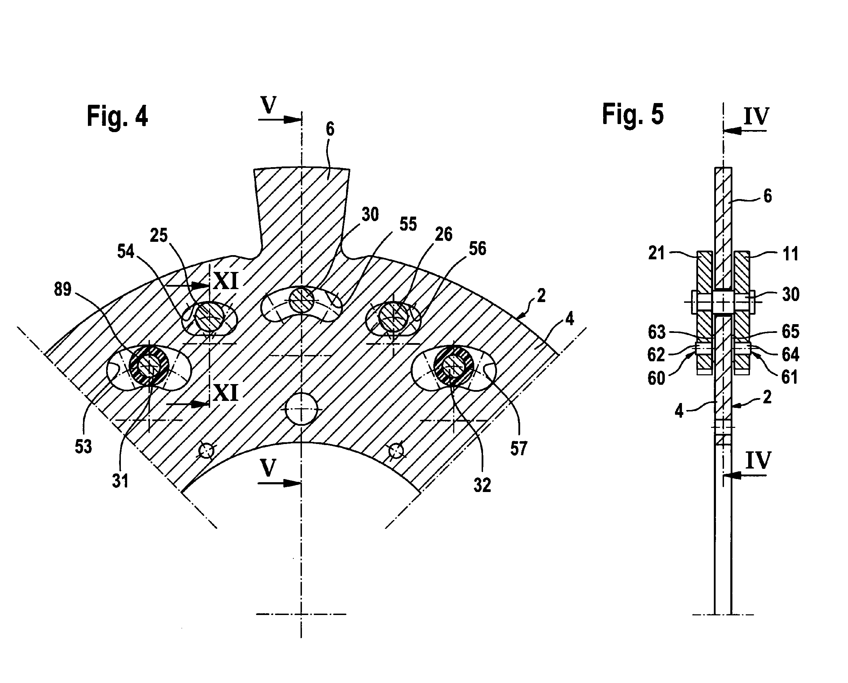

In den Figuren 4 und 5 ist ein Ausschnitt der Pendelmassenträgereinrichtung 2 in verschiedenen Schnittansichten dargestellt. In Figur 4 ist angedeutet, dass die Stufenbolzen 31, 32 im Bereich der Langlöcher 53, 57 mit einer elastischen, dämpfenden Ummantelung versehen sind. In dem Langloch 55 ist ein Stufenbolzen 30 ohne Ummantelung angeordnet. In den Langlöchern 54, 56 ist jeweils eine Laufrolle 25, 26 angeordnet.

In Figur 5 ist die Ansicht eines Schnitts entlang der Linie V-V in Figur 4 dargestellt. In der Schnittansicht sieht man, dass an den Pendelmassen 11, 21 jeweils ein Anlaufelement 61, 60 angebracht ist. Die Anlaufelemente 60, 61 umfassen jeweils einen Stopfen oder Bolzen 62, 64, an dem ein Anlaufkopf 63, 65 angebracht ist. Die Anlaufköpfe 63, 65 sind aus einem Stoß dämpfenden Kunststoffmaterial gebildet und zwischen den Pendelmassen 11, 21 und der Kreisringscheibe 4 der Pendelmassenträgereinrichtung 2 angeordnet.

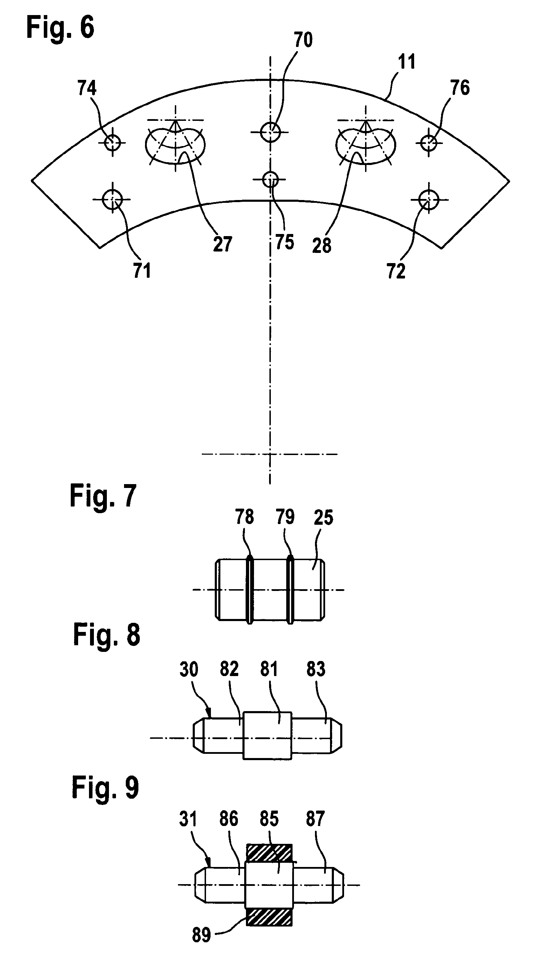

In Figur 6 ist die Pendelmasse 11 allein in der Draufsicht dargestellt. In der Draufsicht sieht man, dass in der Pendelmasse 11 drei Durchgangslöcher 70 bis 72 zur Aufnahme der Stufenbolzen (30 bis 32 in Figur 4) vorgesehen sind. Die Durchgangslöcher 70 bis 72 haben jeweils einen kreisförmigen Querschnitt. Außerdem sind in der Pendelmasse 11 drei Durchgangslöcher 74 bis 76 zur Aufnahme von axialen Anlaufelementen, die in der Figur 1 bei der Pendelmasse 13 mit 44 bis 46 bezeichnet sind, vorgesehen. Die Durchgangslöcher 74 bis 76 in der Pendelmasse 11 haben ebenfalls einen kreisförmigen Querschnitt. Darüber hinaus sind in der Pendelmasse 11 die beiden nierenförmig gekrümmten Langlöcher 27, 28 für die Laufrollen vorgesehen.

In Figur 7 ist die Laufrolle 25 allein in der Draufsicht dargestellt. In der Draufsicht sieht man, dass an der Laufrolle 25 zwei Bunde 78, 79 vorgesehen sind, die sich radial nach außen verjüngen. Die Bunde 78, 79 haben unter anderem die Funktion, im normalen Betrieb der Drehmomentübertragungseinrichtung zu verhindern, dass die Pendelmassen in Kontakt mit der Kreisringscheibe der Pendelmassenträgereinrichtung kommen.

In Figur 8 ist der Stufenbolzen 30 allein in der Draufsicht dargestellt. In der Draufsicht sieht man, dass der Stufenbolzen 30 einen Mittenabschnitt 81 aufweist, von dem sich zwei kreiszylinderförmige Abschnitte 82, 83 in entgegengesetzten Richtungen nach außen erstrecken. Die kreiszylinderförmigen Abschnitte 82, 83 haben einen kleineren Außendurchmesser als der Mittenabschnitt 81. An ihren freien Enden sind die kreiszylinderförmigen Abschnitte 82, 83 mit einer Fase versehen. Im eingebauten Zustand des Stufenbolzens 30 sind die kreiszylinderförmigen Abschnitte 82, 83 in einem der Durchgangslöcher (zum Beispiel 70 in Figur 6) der zugehörigen Pendelmasse aufgenommen. Der Mittenabschnitt 81 des Stufenbolzens 30 ist im eingebauten Zustand in dem zugehörigen Langloch (zum Beispiel 55 in Figur 3) der Kreisringscheibe 4 der Pendelmassenträgereinrichtung 2 angeordnet.

In Figur 9 ist der Stufenbolzen 31 allein in der Draufsicht dargestellt. Der Stufenbolzen 31 weist, wie der Stufenbolzen 30 in Figur 8, einen Mittenabschnitt 85 auf, von dem zwei kreiszylinderförmige Abschnitte 86, 87 ausgehen. Im Unterschied zu dem Stufenbolzen 30 ist der Stufenbolzen 31 in seinem Mittenabschnitt 85 mit einer Ummantelung 89 aus einem elastischen, dämpfenden Kunststoffmaterial, zum Beispiel Gummi, ausgestattet. Die Ummantelung 89 ist im eingebauten Zustand des Stufenbolzens 31 in einem Durchgangsloch (53 in Figur 4) der Kreisringscheibe 4 der Pendelmassenträgereinrichtung 2 angeordnet. Die Ummantelung 89 dient dazu, unerwünschte Geräusche im Betrieb der Drehmomentübertragungseinrichtung zu dämpfen.

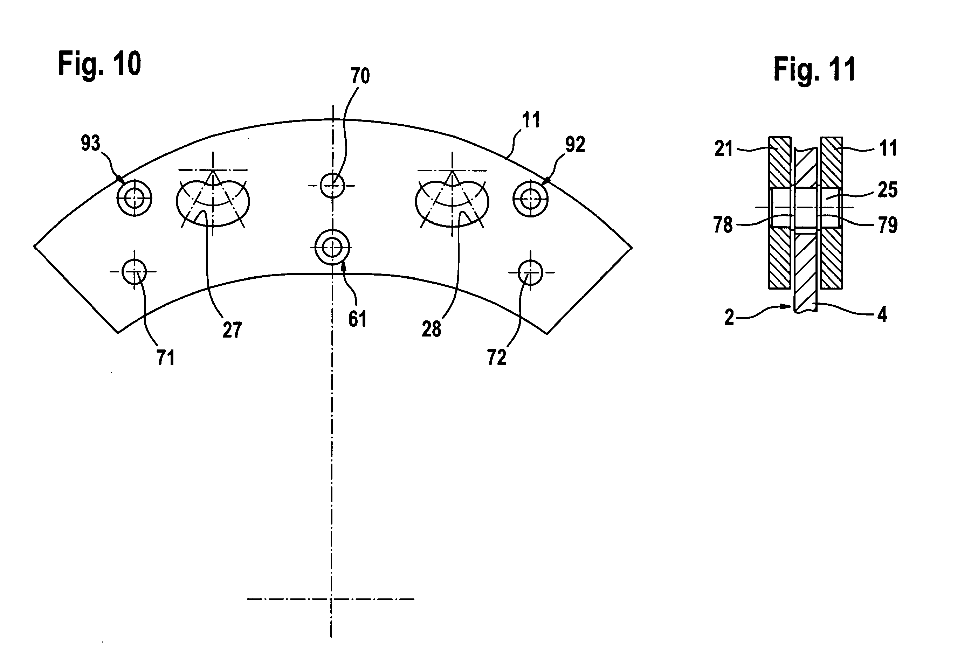

In Figur 10 ist eine ähnliche Darstellung der Pendelmasse 11 wie in Figur 6 gezeigt. allerdings sind in Figur 10 das axiale Anlaufelement 61 und zwei weitere Anlaufelemente 92, 93 in die Pendelmasse 11 eingesetzt.

In Figur 11 ist die Ansicht eines Schnitts entlang der Linie XI-XI in Figur 4 dargestellt. In der Schnittansicht sieht man, dass die Bunde 78, 79 unter Fliehkrafteinwirkung auf die Pendelmassen 11, 21 sicher verhindern, dass die Pendelmassen 11, 21 an der Kreisringscheibe 4 der Pendelmassenträgereinrichtung 2 in Anlage kommen.

Bei der Pendelmassenträgereinrichtung und den Pendelmassen handelt es sich vorzugsweise um Stanzteile aus Stahlblech. Die Pendelmassen können aber auch als Sinterteile gestaltet sein. Die in den Figuren 1 bis 11 dargestellte Fliehkraftpendeleinrichtung 1 kann anstelle eines Innendämpfers in ein Zweimassenschwungrad integriert werden. Dadurch kann ein deutlicher Isolationsgewinn bei Drehzahlen unter 2000 U/min. erreicht werden. Bei dem in den Figuren 1 bis 11 dargestellten Ausführungsbeispiel sind jeweils zwei Pendelmassen über drei Stufenbolzen verbunden. Die drei Stufenbolzen gewährleisten die Parallelität der Pendelmassen. Mindestens zwei von diesen Stufenbolzen sind in ihrem Mittenabschnitt mit einer Ummantelung aus Gummi versehen, so dass bei Anschlägen in Umfangsrichtung, zum Beispiel bei Überschwingern beziehungsweise beim Starten und Stoppen, keine Metallgeräusche auftreten.

Der nicht gummierte Stufenbolzen in der Mitte der Pendelmasse hat immer mehr Spiel zum Flansch und kann als Endanschlag benutzt werden, zum Beispiel bei Impacts, damit die Ummantelung des Mittenabschnitts der gummierten Bolzen nicht überbelastet wird. Vorzugsweise sind pro Pendelmasse drei axiale Anlaufelemente aus Kunststoff vorgesehen. Die axialen Anlaufelemente können verclipst oder angeschweißt werden. Die axialen Anlaufelemente, deren Köpfe über die Pendelmassenoberfläche erhaben sind, gewährleisten auch bei geringer Fliehkraftwirkung, zum Beispiel bei nur 300 U/min., dass ein axiales Anlaufen zwischen den Pendelmassen und dem Flansch verhindert wird. Dadurch werden unerwünschte Metallgeräusche sicher verhindert. Durch die mit den Bunden ausgestatteten Laufrollen erfolgt eine Selbstzentrierung der Pendelmassen.

Im normalen Betrieb unter hoher Fliehkrafteinwirkung können die Pendelmassen nicht in Kontakt mit dem Flansch kommen, der auch als Kreisringscheibe der Pendelmassenträgereinrichtung bezeichnet wird. Da der Außendurchmesser der Bunde etwas kleiner als der Innendurchmesser des zugehörigen Langlochs in der Pendelmassenträgereinrichtung ist, können die Laufrollen bei der Montage mit den Bunden durch das zugehörige Langloch in der Pendelmassenträgereinrichtung hindurch gesteckt werden. Da der Innendurchmesser der Durchgangslöcher in den Pendelmassen kleiner als der Außendurchmesser der Bunde der Laufrollen ist, wird ein Herausfallen der Laufrollen nach der Montage der Pendelmassen sicher verhindert. Die Pendelmassen werden durch die Stufenbolzen in axialer Richtung fixiert, indem die freien Enden der Stufenbolzen die zugehörigen Pendelmassen nietartig umgreifen, wie zum Beispiel in Figur 5 angedeutet ist.

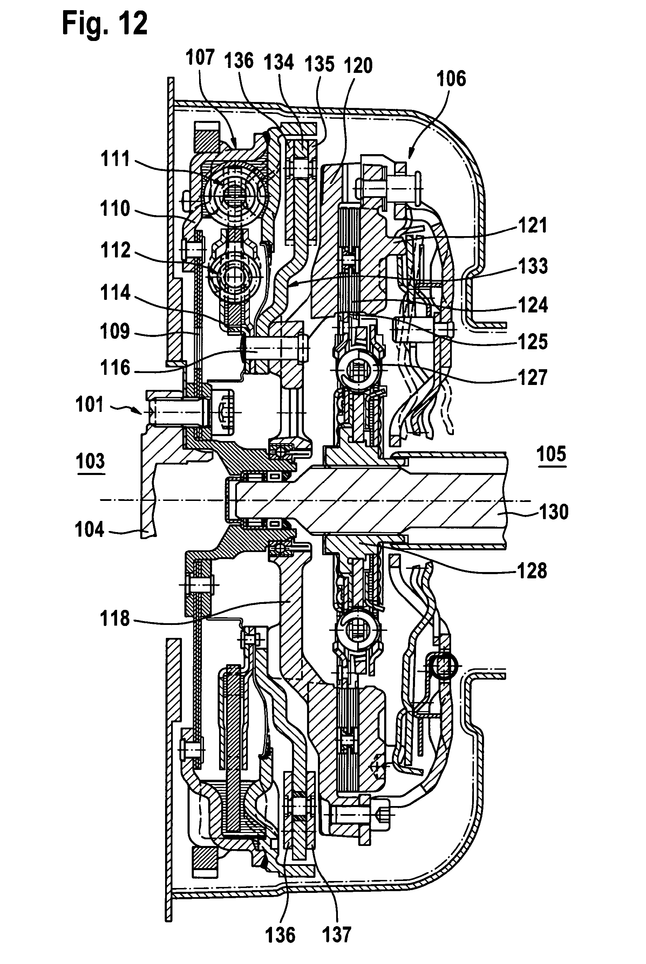

In Figur 12 ist ein Teil eines Antriebsstrangs 101 eines Kraftfahrzeugs dargestellt. Zwischen einer Antriebseinheit 103, insbesondere einer Brennkraftmaschine, von der eine Kurbelwelle 104 ausgeht, und einem Getriebe 105 ist eine Kupplung 106 angeordnet. Zwischen die Antriebseinheit 103 und die Kupplung 106 ist eine Drehschwingungsdämpfungseinrichtung 107 geschaltet. Bei der Drehschwingungsdämpfungseinrichtung 107 handelt es sich um ein Zweimassenschwungrad, das auch als Torsionsschwingungsdämpfer bezeichnet wird.

Die Kurbelwelle 104 der Brennkraftmaschine 103 ist über Schraubverbindungen fest mit einer flex plate 109 verbunden. Die flex plate 109 dient dazu, ein Eingangsteil 110, das auch als Primärteil bezeichnet wird, eines äußeren Schwingungsdämpfers 111 drehfest, aber axial begrenzt bewegbar mit der Kurbelwelle 104 der Brennkraftmaschine 103 zu verbinden. Radial innerhalb des äußeren Drehschwingungsdämpfers 111 ist ein innerer Drehschwingungsdämpfer 112 angeordnet. Ein Ausgangsteil 114 des inneren Drehschwingungsdämpfers 112 ist mit Hilfe von Nietverbindungen 116, von denen in Figur 12 nur eine sichtbar ist, fest mit einer Sekundärschwungscheibe 118 verbunden. Das Ausgangsteil 114 des inneren Drehschwingungsdämpfers 112 wird auch als Sekundärteil bezeichnet. Die Sekundärschwungscheibe 118 geht radial außen in eine Gegendruckplatte 120 der Kupplung 106 über. Zwischen der Gegendruckplatte und einer Druckplatte 121 der Kupplung 106 sind in bekannter Art und Weise Reibbeläge 124 einer Kupplungsscheibe 125 einklemmbar. Die Kupplungsscheibe 125 ist unter Zwischenschaltung eines Drehschwingungsdämpfers 127 mit einer Kupplungsnabe 128 gekoppelt. Die Kupplungsnabe 128 wiederum ist drehfest mit einer Getriebeeingangswelle 130 des Getriebes 105 verbunden.

In axialer Richtung zwischen der Drehschwingungsdämpfungseinrichtung 107 und der Kupplung 106 ist eine Fliehkraftpendeleinrichtung 133 angeordnet. Die Fliehkraftpendeleinrichtung 133 umfasst eine Pendelmassenträgereinrichtung 134, an der radial außen, wie bei dem in den Figuren 1 bis 11 dargestellten Ausführungsbeispiel, Pendelmassen 135 bis 138 begrenzt bewegbar angebracht sind. Die Pendelmassenträgereinrichtung 134 ist radial innen mit Hilfe der Nietverbindungen 116 zwischen dem Ausgangsteil 114 des inneren Drehschwingungsdämpfers 112 und der Sekundärschwungscheibe 118 eingeklemmt.

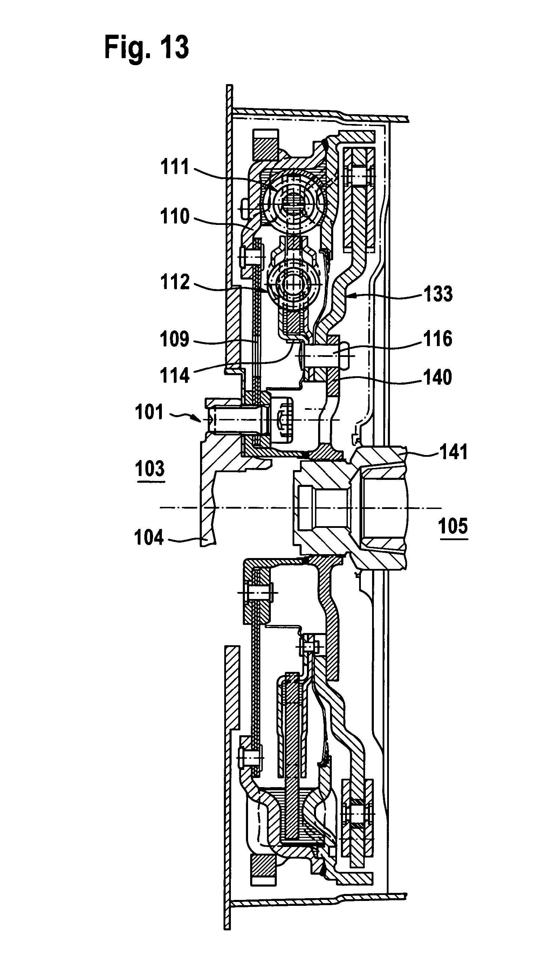

In den Figuren 13 bis 15 sind ähnliche Drehmomentübertragungseinrichtungen wie in Figur 12 dargestellt. Zur Bezeichnung gleicher Teile werden gleiche Bezugszeichen verwendet. Um Wiederholungen zu vermeiden, wird auf die vorangegangene Beschreibung der Figur 12 verwiesen. Im Folgenden wird nur auf die Unterschiede zwischen den einzelnen Ausführungsbeispielen eingegangen.

In Figur 13 ist die Kupplung (106 in Figur 12) weggelassen. Die Fliehkraftpendeleinrichtung 133 ist mit Hilfe der Nietverbindungen 116 an einem Nabenteil 140 befestigt. Eine Getriebeeingangswelle 141 ist in bekannter Art und Weise zum Beispiel mit einem CVT-Getriebe gekoppelt. Die Fliehkraftpendeleinrichtung 133 kann auch in Verbindung mit einem Doppelkupplungsgetriebe eingebaut werden.

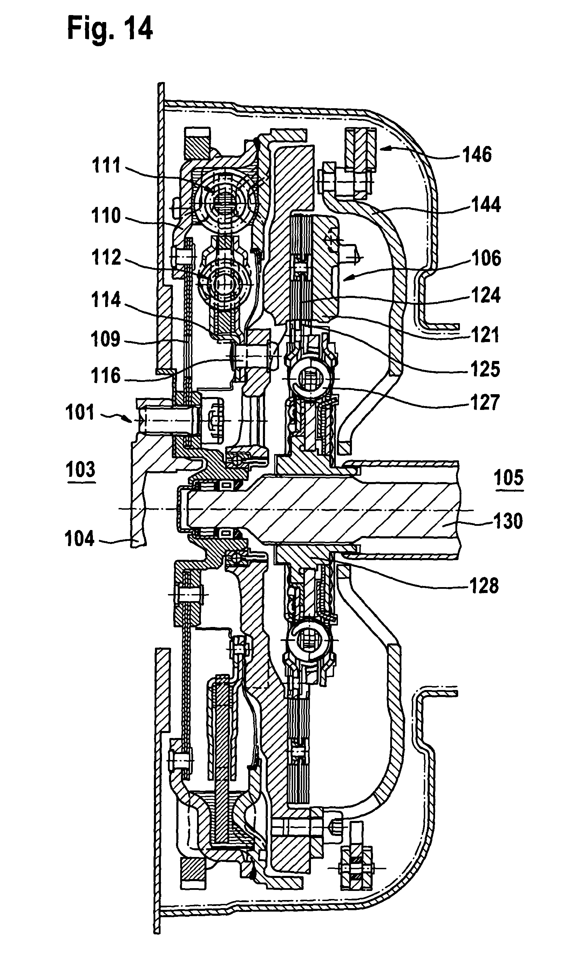

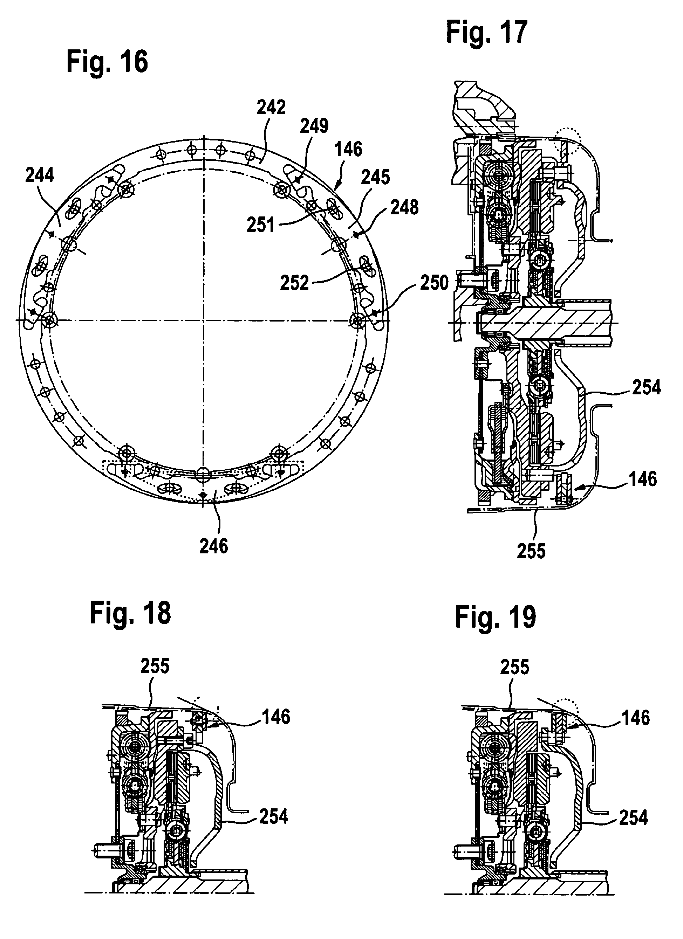

In Figur 14 ist eine Drehmomentübertragungseinrichtung mit einem Kupplungsdeckel 144 dargestellt, an dem radial außen eine Fliehkraftpendeleinrichtung 146 angebracht ist. Der Aufbau und die Funktion der Fliehkraftpendeleinrichtung 146 werden im Folgenden anhand der Figuren 16 bis 23 näher erläutert.

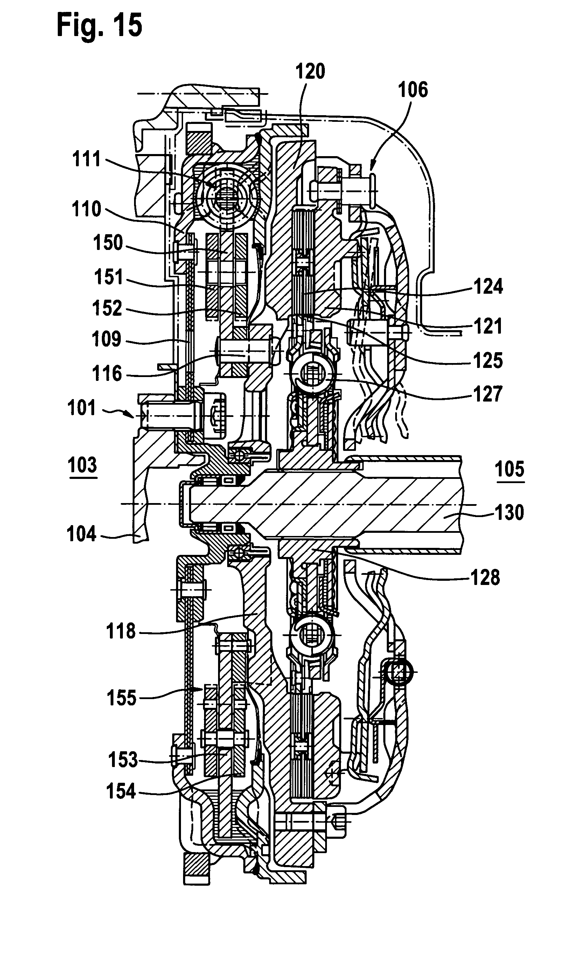

In Figur 15 ist eine Drehmomentübertragungseinrichtung dargestellt, bei der im Vergleich zu dem in Figur 12 dargestellten Ausführungsbeispiel anstelle des inneren Drehschwingungsdämpfers (112 in Figur 12) an einem Ausgangsteil 150 des äußeren Drehschwingungsdämpfers 111 Pendelmassen 151 bis 154 bewegbar angebracht sind. Das Ausgangsteil 150 des äußeren Drehschwingungsdämpfers 111 bildet die Pendelmassentrageinrichtung. Das Ausgangsteil 150 bildet zusammen mit den Pendelmassen 154 eine Fliehkraftpendeleinrichtung 155, die analog zu der in den Figuren 1 bis 11 dargestellten Fliehkraftpendeleinrichtung gestaltet ist.

In Figur 16 ist die Fliehkraftpendeleinrichtung 146 aus Figur 14 in Alleinstellung in der Draufsicht dargestellt. Die Fliehkraftpendeleinrichtung 146 umfasst eine Pendelmassenträgereinrichtung 242, an der drei Pendelmassen 244 bis 246 bewegbar angebracht sind. Die Pendelmasse 245 ist in ähnlicher Art und Weise wie bei dem in den Figuren 1 bis 11 dargestellten Ausführungsbeispiel mit Hilfe eines Stufenbolzens 248, mit Hilfe von ummantelten Stufenbolzen 249, 250 und mit Hilfe von zwei Laufrollen 251, 252 bewegbar an der Pendelmassenträgereinrichtung 242 gehalten.

In den Figuren 17 bis 19 sieht man, wie die Fliehkraftpendeleinrichtung 146 in radialer Richtung zwischen einem Kupplungsdeckel 254 und einer Kupplungsglocke 255 angeordnet ist.

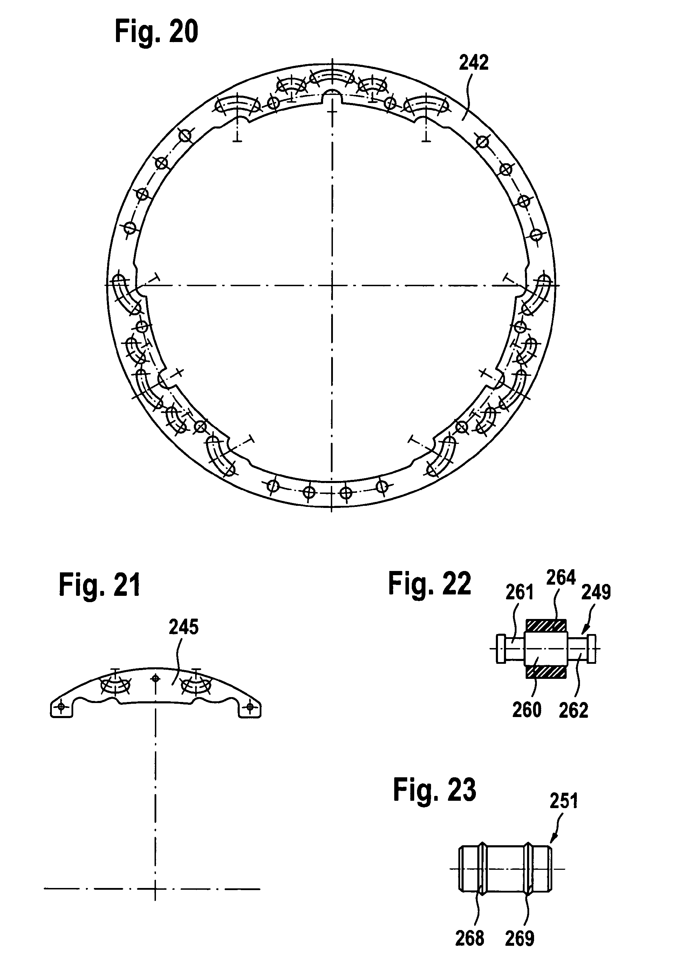

In Figur 20 ist die Pendelmassenträgereinrichtung 242 in Alleinstellung dargestellt. In Figur 21 ist die Pendelmasse 245 in Alleinstellung dargestellt. In Figur 22 ist der Stufenbolzen 249 in Alleinstellung dargestellt. Der Stufenbolzen 249 umfasst einen Mittenabschnitt 260, von dem sich in entgegengesetzten Richtungen zwei kreiszylinderförmige Abschnitte 261, 262 erstrecken. Der Mittenabschnitt 260 weist einen größeren Außendurchmesser als die kreiszylinderförmigen Abschnitte 261, 262 auf. Außerdem ist der Mittenabschnitt 260 mit einer Ummantelung 264 aus einem elastischen, dämpfenden Kunststoffmaterial versehen.

In Figur 23 ist die Laufrolle 251 in Alleinstellung dargestellt. Die Laufrolle 251 weist, wie dem in den Figuren 1 bis 11 dargestellten Ausführungsbeispiel zwei Bunde 268, 269 auf. Die Laufrollen, die Stufenbolzen, die Pendelmassen und die Pendelmassenträgereinrichtung haben bei dem in den Figuren 16 bis 23 dargestellten Ausführungsbeispiel die gleiche Wirkung und Funktion wie bei dem in den Figuren 1 bis 11 dargestellten Ausführungsbeispiel.

### Bezuctszeichenliste

- 1.: Fliehkraftpendeleinrichtung
- 2.: Pendelmassenträgereinrichtung
- 4.: Kreisringscheibe
- 6.: radialer Ansatz
- 7.: radialer Ansatz
- 11.: Pendelmasse
- 12.: Pendelmasse
- 13.: Pendelmasse
- 14.: Pendelmasse
- 21.: Pendelmasse
- 23.: Pendelmasse
- 25.: Laufrolle
- 26.: Laufrolle
- 27.: Laufbahn
- 28.: Laufbahn
- 30.: Stufenbolzen
- 31.: Stufenbolzen
- 32.: Stufenbolzen
- 33.: Aufbruch
- 35.: Laufrolle
- 36.: Laufrolle
- 37.: Laufbahn
- 38.: Laufbahn
- 40.: Stufenbolzen
- 41.: Stufenbolzen
- 42.: Stufenbolzen
- 44.: axiales Anlaufelement
- 45.: axiales Anlaufelement
- 46.: axiales Anlaufelement
- 48.: Bolzen
- 49.: Bolzenkopf
- 50.: Bolzen
- 51.: Bolzenkopf
- 53.: Durchgangsloch
- 54.: Durchgangsloch
- 55.: Durchgangsloch
- 56.: Durchgangsloch
- 57.: Durchgangsloch
- 60.: Anlaufelement
- 61.: Anlaufelement
- 62.: Bolzen
- 63.: Anlaufkopf
- 64.: Bolzen
- 65.: Anlaufkopf
- 70.: Durchgangsloch
- 71.: Durchgangsloch
- 72.: Durchgangsloch
- 74.: Durchgangsloch
- 75.: Durchgangsloch
- 76.: Durchgangsloch
- 78.: Bund
- 79.: Bund
- 81.: Mittenabschnitt
- 82.: kreiszylinderförmiger Abschnitt
- 83.: kreiszylinderförmiger Abschnitt
- 85.: Mittenabschnitt
- 86.: kreiszylinderförmiger Abschnitt
- 87.: kreiszylinderförmiger Abschnitt
- 89.: Ummantelung
- 92.: Anlaufelement
- 93.: Anlaufelement
- 101.: Antriebsstrang
- 103.: Antriebseinheit
- 104.: Kurbelwelle
- 105.: Getriebe
- 106.: Kupplung
- 107.: Drehschwingungsdämpfungseinrichtung
- 109.: flex plate
- 110.: Eingangsteil
- 111.: äußere Drehschwingungsdämpfer
- 112.: innere Drehschwingungsdämpfer
- 114.: Ausgangsteil
- 116.: Nietverbindung
- 118.: Sekundärschwungscheibe
- 120.: Gegendruckplatte
- 121.: Druckplatte
- 124.: Reibbeläge
- 125.: Kupplungsscheibe
- 127.: Drehschwingungsdämpfer
- 128.: Kupplungsnabe
- 130.: Getriebeeingangswelle
- 133.: Fliehkraftpendeleinrichtung
- 134.: Pendelmassenträgereinrichtung
- 135.: Pendelmasse
- 136.: Pendelmasse
- 137.: Pendelmasse
- 138.: Pendelmasse
- 140.: Nabenteil
- 141.: Getriebeeingangswelle
- 144.: Kupplungsdeckel
- 146.: Fliehkraftpendeleinrichtung
- 150.: Ausgangsteil
- 151.: Pendelmasse
- 152.: Pendelmasse
- 153.: Pendelmasse
- 154.: Pendelmasse
- 155.: Fliehkraftpendeleinrichtung
- 242.: Pendelmassenträgereinrichtung
- 244.: Pendelmasse
- 245.: Pendelmasse
- 246.: Pendelmasse
- 248.: Stufenbolzen
- 249.: ummantelter Stufenbolzen
- 250.: ummantelter Stufenbolzen
- 251.: Laufrollen
- 252.: Laufrollen
- 254.: Kupplungsdeckel
- 255.: Kupplungsglocke
- 260.: Mittenabschnitt
- 261.: kreiszylinderförmiger Abschnitt
- 262.: kreiszylinderförmiger Abschnitt
- 264.: elastische Ummantelung
- 268.: Bund
- 269.: Bund

## Patentansprüche

1. Drehmomentübertragungseinrichtung im Antriebsstrang (101) eines Kraftfahrzeugs zur Drehmomentübertragung zwischen einer Antriebseinheit (103), insbesondere einer Brennkraftmaschine, mit einer Abtriebswelle (104), insbesondere einer Kurbelwelle, und einem Getriebe (105) mit mindestens einer Getriebeeingangswelle (130), mit einer Fliehkraftpendeleinrichtung (1;133;146;155), die mehrere Pendelmassen (11-14,21,23;135-138;151-154) umfasst, die mit Hilfe von Laufrollen (25,26,35,36;251) an einer Pendelmassenträgereinrichtung (2;242) relativ zu dieser bewegbar angebracht sind, und mit mindestens einer Kupplungseinrichtung (106) und/oder mit mindestens einer Drehschwingungsdämpfungseinrichtung (107), **dadurch gekennzeichnet, dass** die Laufrollen (25,26,35,36;251) jeweils mindestens einen Bund (78,79;268,269) aufweisen, der unter Fliehkrafteinwirkung auf die Pendelmasse (11-14,21,23;135-138;151-154) in axialer Richtung zwischen der Pendelmasse (11-14,21,23;135-185;151-154) und der Pendelmassenträgereinrichtung (2;242) angeordnet ist.

2. Drehmomentübertragungseinrichtung nach Anspruch 1, **dadurch gekennzeichnet, dass** sich der Bund (78,79;268,269) in radialer Richtung nach außen hin verjüngt.

3. Drehmomentübertragungseinrichtung nach einem der vorhergehenden Ansprüche, **dadurch gekennzeichnet, dass** die Laufrollen (25,26;251,252) jeweils in einer Aussparung (54,56) angeordnet sind, die in der Pendelmassenträgereinrichtung (2;242) ausgespart und deren Abmessungen in radialer Richtung des Bundes (78,79;268,269) größer als der Außendurchmesser des Bundes sind.

4. Drehmomentübertragungseinrichtung nach einem der vorhergehenden Ansprüche, **dadurch gekennzeichnet, dass** die Enden der Laufrollen (25,26;251,252) jeweils in einer Ausnehmung (27,28) der Pendelmassen (11) angeordnet sind, deren Abmessungen in radialer Richtung des Bundes (78,79) kleiner als der Außendurchmesser des Bundes sind.

5. Drehmomentübertragungseinrichtung nach dem Oberbegriff des Anspruchs 1, insbesondere nach einem der vorhergehenden Ansprüche, **dadurch gekennzeichnet, dass** die Bewegung der Pendelmassen (11-14,21,23;135-138;151-154) relativ zu der Pendelmassenträgereinrichtung (2;242) durch mindestens ein Anschlagelement (31,32;249) begrenzt ist, das in Umfangsrichtung, zumindest teilweise, elastisch beziehungsweise dämpfend ausgebildet ist.

6. Drehmomentübertragungseinrichtung nach Anspruch 5, **dadurch gekennzeichnet, dass** das Anschlagelement (31,32;249) von einem Stufenbolzen gebildet wird, dessen Enden jeweils in einer Pendelmasse (11;245) aufgenommen sind und der zwischen seinen Enden einen Mittenabschnitt (85;260) aufweist, der mit einem elastischen beziehungsweise dämpfenden Material (89;264) ummantelt ist.

7. Drehmomentübertragungseinrichtung nach dem Oberbegriff des Anspruchs 1, insbesondere nach einem der vorhergehenden Ansprüche, **dadurch gekennzeichnet, dass** an den Pendelmassen (11,21) und/oder der Pendelmassenträgereinrichtung mindestens ein axiales Anlaufelement (60,61) angebracht ist.

8. Drehmomentübertragungseinrichtung nach einem der vorhergehenden Ansprüche, **dadurch gekennzeichnet, dass** das axiale Anlaufelement (60,61) von einem Kunststoffstopfen mit einem Kopf (63,65) gebildet wird, der so an der Pendelmasse (21,11) angebracht ist, dass der Kopf in axialer Richtung zumindest teilweise zwischen der Pendelmasse (21,11) und der Pendelmassenträgereinrichtung (2) angeordnet ist.

9. Drehmomentübertragungseinrichtung nach einem der vorhergehenden Ansprüche, **dadurch gekennzeichnet, dass** die Fliehkraftpendeleinrichtung (133) in axialer Richtung zwischen der Kupplungseinrichtung (106) und der Drehschwingungsdämpfungseinrichtung (107) angeordnet ist.

10. Drehmomentübertragungseinrichtung nach einem der Ansprüche 1 bis 8, **dadurch gekennzeichnet, dass** die Fliehkraftpendeleinrichtung (146) an einem Kupplungsdeckel (144) der Kupplungseinrichtung (106) angebracht ist.
